# EUROPÄISCHE PATENTSCHRIFT

(11) **EP 2 304 515 B1**
(45) Veröffentlichungstag und Bekanntmachung des Hinweises auf die Patenterteilung: **18.02.2015**
(21) Anmeldenummer: 09768871.7
(22) Anmeldetag: 12.05.2009
(51) Int. Cl.: G05D 7/06

(54) **STEUERANORDNUNG MIT EINEM DRUCKBEGRENZUNGSVENTIL**
CONTROL ARRANGEMENT HAVING A PRESSURE LIMITING VALVE
SYSTÈME DE COMMANDE COMPRENANT UNE SOUPAPE DE LIMITATION DE PRESSION

(30) Priorität: 23.06.2008 DE 102008029641
(43) Veröffentlichungstag der Anmeldung: 06.04.2011
(73) Patentinhaber: Robert Bosch GmbH, 70469 Stuttgart (DE)
(72) Erfinder: FISCHER, Steffen, 97816 Lohr am Main (DE); VOLPERT, Wolfgang, 97737 Gemünden (DE); SCHOPPEL, Georg, 97816 Lohr am Main (DE)
(74) Vertreter: Thürer, Andreas
(86) Internationale Anmeldenummer: PCT/EP2009/003347
(87) Internationale Veröffentlichungsnummer: WO 2009/156022

(56) Entgegenhaltungen:
- EP-A- 0 357 964
- DE-A1- 3 909 693
- US-A- 4 277 832
- US-A1- 2003 125 840

## Beschreibung

Die Erfindung betrifft eine Steueranordnung mit einem Druckbegrenzungsventil oder einem proportionalen Drosselventil gemäß dem Oberbegriff von Anspruch 1.

Stromregelventile haben die Aufgabe, einen eingestellten Volumenstrom unabhängig von Druckschwankungen konstant zu halten. Zu diesem Zweck ist neben einer Messdrossel eine bewegliche Drossel vorgesehen, die als Druckwaage arbeitet und gleichzeitig ein Vergleichsglied in einem Regelkreis darstellt. Durch das Prinzip der Druckwaage ist der maximale Volumenstrom begrenzt und es besteht die Gefahr, dass Schwingungen im System erzeugt werden.

Aus der Patentschrift DE 37 34 955 C2 ist eine Vorrichtung zur elektrischen Messwertaufbereitung für ein Wege-Regelventil bekannt, bei dem eine Zwischenplatte zur Verbindung zwischen Bohrungen des Wege-Regelventils mit der Druckmittelquelle, dem Tank und Arbeitsleitungen vorgesehen ist. In der Zwischenplatte sind Druckmessvorrichtungen zum Erfassen eines einlassseitigen und/oder auslassseitigen Drucks vorgesehen, deren Ausgangssignale über eine Aufbereitungseinrichtung beispielsweise zum Konstanthalten eines vorbestimmten Durchflusses verwendet werden können. Aufgrund der Vielzahl an Hydraulikanschlüssen am Regelventil ergibt sich ein hoher apparativer Aufwand zur Umsetzung der Stromregelfunktion.

Die DE 39 09 693 A1 offenbart ein vorgesteuertes Drosselventil, das in Abhängigkeit vom Kolbenhub der Hauptstufe und von einer Druckdifferenz über der Hauptstufe im Sinne einer Volumenstromregelung ansteuerbar ist.

Die US 2003/0125840 A1 betrifft ein proportional verstellbares Ventil, das direkt mittels eines Proportionalmagneten angesteuert wird.

Die EP 0 357 964 A2 beschreibt ein elektronisch geregeltes direkt gesteuertes Schieberventil. Das Ventil kann in einer Druckregelfunktion und in einer Lageregelfunktion betrieben werden.

Die Aufgabe der vorliegenden Erfindung besteht darin, eine Steueranordnung zu schaffen, über die eine Stromregelfunktion mit geringem vorrichtungstechnischen Aufwand und hohem maximalen Volumenstrom umsetzbar ist.Diese Aufgabe wird durch eine Steueranordnung mit einem Proportional-Druckbegrenzungsventil oder einem Proportional-Drosselventil gemäß Anspruch 1 gelöst.

Es wird eine Steueranordnung mit einem Proportional-Druckbegrenzungsventil oder einem Proportional-Drosselventil vorgesehen, die eine Steuereinrichtung hat, über die das Ventil im Sinne einer Stromregelung ansteuerbar ist. Auf diese Weise lassen sich die Schwingungsanfälligkeit herkömmlicher Stromregelventile mit Druckwaage vermeiden und hohe Volumenströme mit geringem vorrichtungstechnischem Aufwand umsetzen.

Es wird bevorzugt, wenn die Steuereinrichtung einen Ventilsollwert in Abhängigkeit von einer Druckdifferenz über dem Ventil und einem Sollvolumenstrom berechnet. Dieses ermöglicht lediglich auf der Grundlage eines in der Steuereinrichtung implementierten Kennlinienfeldes den Einsatz als Stromregler.

In einer Alternative weist die Steuereinrichtung einen Regler für den Ventilsollwert auf, dem der Sollvolumenstrom und ein über ein Kennlinienfeld aus der Druckdifferenz über dem Ventil und dem Ventilsollwert ermittelter Volumenstrom zuführbar ist. Bei einer derartigen Gestaltung ist von Vorteil, das ein ermittelter Ist-Volumenstrom vorliegt und trotz der Verwendung eines Reglers eine Berechnungseinrichtung mit einem implementierten Kennlinienfeld eingesetzt werden kann.

In einer weiteren Alternative weist die Steuereinrichtung einen Regler für den Ventilsollwert auf, dem die Druckdifferenz über dem Ventil und eine über ein Kennlinienfeld aus dem Sollvolumenstrom und dem Ventilsollwert ermittelte Druckdifferenz zuführbar ist. Bei dieser Implementierung wird aus dem Sollwert für den Volumenstrom ein Sollwert für die Druckdifferenz gebildet, die mit dem Istwert für die Druckdifferenz verglichen wird. Somit liegen zusätzliche Prozessangaben für eine Einschätzung des Betriebes der Steuereinrichtung vor.

Durch den erfindungsgemäßen Einsatz eines vorgesteuerten Druckbegrenzungsventils in der Steueranordnung lassen sich höhere Volumenströme realisieren, die auch im Bezug auf die Stromregelfunktion umsetzbar sind.

Zudem ist zur Minimierung der Hysterese des vorgesteuerten Druckbegrenzungsventils ein Magnetanker eines Vorsteuerventils mit einer unterlagerten Lageregelung vorgesehen oder es ist zur Minimierung der Hysterese des vorgesteuerten Druckbegrenzungsventils eine unterlagerte Druckregelung eines Vorsteuerdrucks eines Vorsteuerventils vorgesehen.

Erfindungsgemäße Weiterbildung sind Gegenstand der Unteransprüche.

Die Steueranordnung kann eine Messeinrichtung für die Druckdifferenz über dem Ventil aufweisen, so dass der Stromregler mit geringem vorrichtungstechnischem Aufwand realisierbar ist.

Bei Einsatz einer Druckmesseinrichtung für den Druck stromaufwärts und einer Druckmesseinrichtung für den Druck stromabwärts von dem Ventil lässt sich neben der Stromregelfunktion die Druckbegrenzungsfunktion mit zusätzlichen Messwerten umsetzen.

Das Druckbegrenzungsventil ist vorzugsweise ein Proportional-Druckbegrenzungsventil, wodurch bei einer Änderung des Ventilsollwertes eine schnelle Änderung bei der Druckdifferenz über dem Druckbegrenzungsventil möglich ist.

Die bei Proportional-Drossel- und -Druckbegrenzungsventilen zur Vorsteuerung eingesetzten direktgesteuerten Proportional-Druckbegrenzungsventile sind prinzipbedingt hysteresebehaftet. Diese Hysterese wirkt sich ohne weitere Maßnahmen direkt in der beschriebenen Stromregelfunktion aus, so dass sich sowohl in der Sollwert-Volumenstrom-Kennlinie als auch in der Eingangs- bzw. Ausgangsdruckabhängigkeit jeweils hysteresebehaftete Verläufe ergeben können.

Dieser (negativen) Eigenschaft kann man dadurch begegnen, eine eineindeutige Zuordnung zwischen dem Sollwert U_{D} und dem Vorsteuerdruck pₓ auf der Rückseite des Hauptkolbens bzw. -schiebers herzustellen.

Dies ist z. B. durch den Einsatz von Proportional-Druckbegrenzungsventile mit Regelung der Ankerposition zur Vorsteuerung realisierbar. Diese Ventile sind prinzipbedingt hysteresearm bzw. -frei, so dass die beschriebenen Effekte nicht auftreten.

Eine zweite Möglichkeit, kann die Implementierung einer unterlagerten Regelung des Vorsteuerdrucks sein. Die Erfassung des Vorsteuerdrucks pₓ über einen zusätzlichen Drucksensor ermöglicht die unterlagerte Regelung bzw. Nachführung des Sollwertes U_{D} in der Art, dass die beschriebenen Hystereseeffekte geräteintern eliminiert werden können.

Nachfolgend wird die vorliegende Erfindung an Hand schematischer Zeichnungen beschrieben, es zeigen:
Fig. 1 eine Steueranordnung entsprechend einem ersten Ausführungsbeispiel der Erfindung,
Fig. 2 ein Kennlinienfeld für eine Steueranordnung entsprechend dem ersten Ausführungsbeispiel der Erfindung,
die Figuren 3 und 4 Kennlinien für die Druckdifferenz über dem Volumenstrom sowie Prozentwerte des Drucks über dem Steuerstrom bzw. der Steuerspannung eines Druckbegrenzungsventils nach dem Stand der Technik,
Fig. 5 eine Steueranordnung entsprechend dem zweiten Ausführungsbeispiel der Erfindung,
Fig. 6 ein Kennlinienfeld für eine Steueranordnung entsprechend dem zweiten Ausführungsbeispiel der Erfindung,
Fig. 7 eine Steueranordnung entsprechend dem dritten Ausführungsbeispiel der Erfindung und
Fig. 8 ein Kennlinienfeld für eine Steueranordnung entsprechend dem dritten Ausführungsbeispiel der Erfindung.

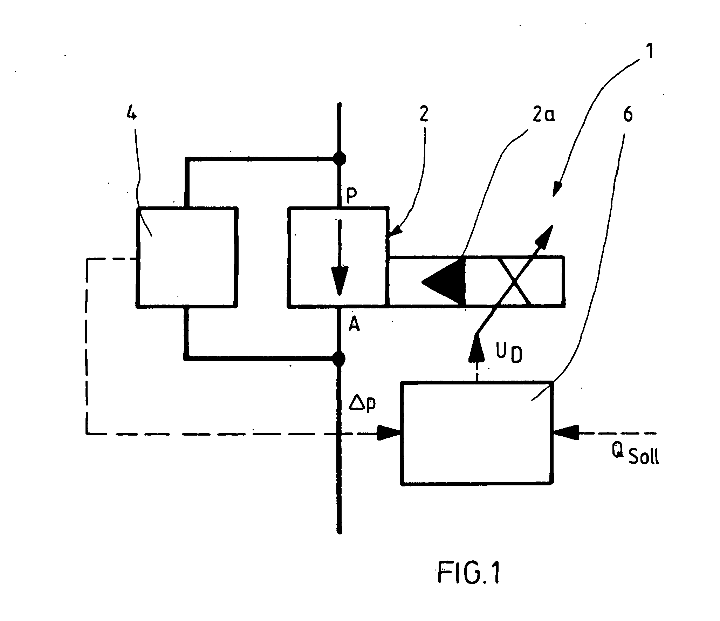

Die in Fig. 1 gezeigte Steueranordnung 1 entsprechend dem ersten Ausführungsbeispiel weist ein vorgesteuertes Proportional-Druckbegrenzungsventil 2 mit einem Pumpenanschluss P und einem Arbeitsanschluss A ,einen Differenzdruckmesser 4 und eine Steuereinrichtung 6 auf.

Die Druckdifferenz zwischen dem Pumpenanschluss P und dem Arbeitsanschluss A wird durch den Differenzdruckmesser 4 bestimmt, dessen Ausgangssignal Δp der Steuereinrichtung 6 zugeführt wird. Als weiteres Eingangssignal nimmt die Steuereinrichtung 6 einen Sollvolumenstrom Q_{Soll} auf. Aus den Eingangsgrößen Δp und Q_{Soll} berechnet die Steuereinrichtung 6 einen Ventilsollwert in Form einer Steuerspannung U_{D}, die einem Elektromagneten des Vorsteuerventils 2a des Druckbegrenzungsventils 2 zugeführt wird.

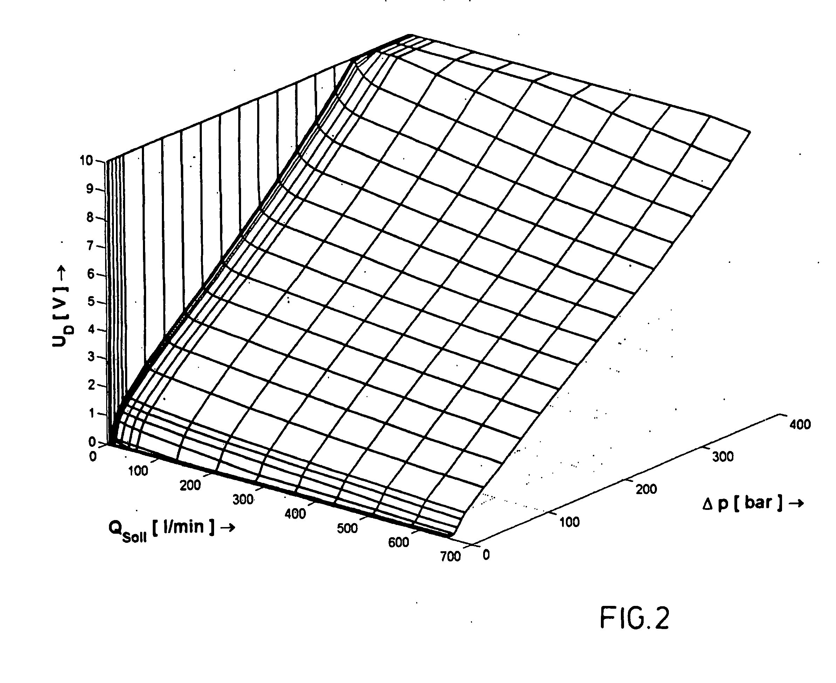

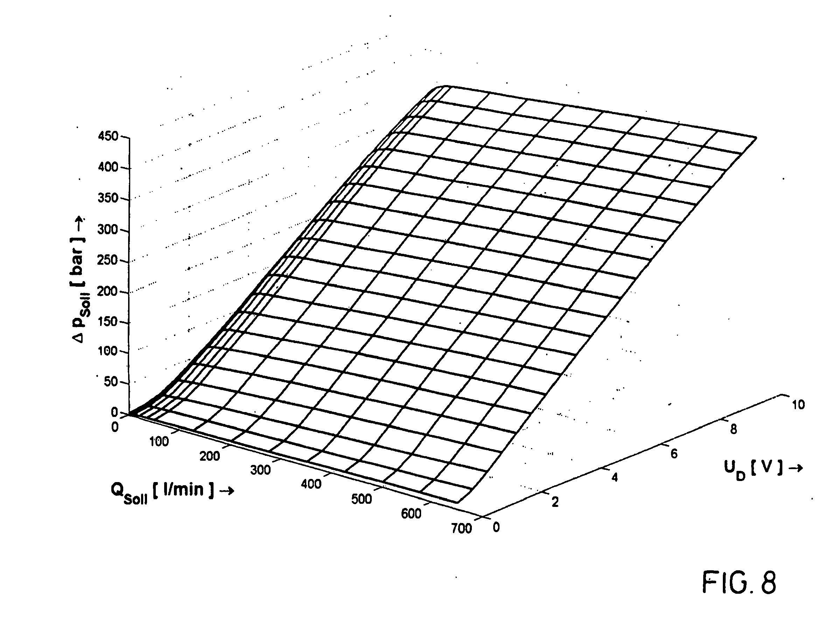

In der Steuereinrichtung 6 ist ein Kennlinienfeld gespeichert, das beispielhaft in Fig. 2 wieder gegeben ist und auf dessen Achsen die Druckdifferenz, der Volumenstrom Q_{Soll} und der Ventilsollwert U_{D} wiedergegeben sind. Dieses Kennlinienfeld wird aus dem in Fig. 8 gezeigten Zusammenhang zwischen Ventilssollwert U_{D}, Volumenstrom Q und der daraus resultieren Druckdifferenz Δp durch Invertieren erhalten. Voraussetzung für die Möglichkeit des Invertierens ist, dass in der Kennlinie in Fig. 8 der Druck Δp monoton über dem Volumenstrom ansteigt. Dieses ist in der Regel bei direkt gesteuerten Ventilen erfüllt. Bei vorgesteuerten Druckbegrenzungsventilen kann eine derartige Kennlinie bei internem Steueröl realisiert werden.

Das Vorschalten des Kennlinienfeldes aus Fig. 2 vor das Proportional-Druckbegrenzungsventil 2 ermöglicht, dass ein vorgesteuertes Proportional-Druckbegrenzungsventil, wie dieses beispielsweise im RD-Merkblatt der Rexroth Bosch Group 29140/07.05 wiedergegeben ist, als ein Stromregler zum Einsatz gebracht werden kann. Bei einem vorgegebenen Sollwert Q_{Soll} für den Volumenstrom kann aus der gemessenen Druckdifferenz Δp der Ventilsollwert U_{D} ermittelt werden.

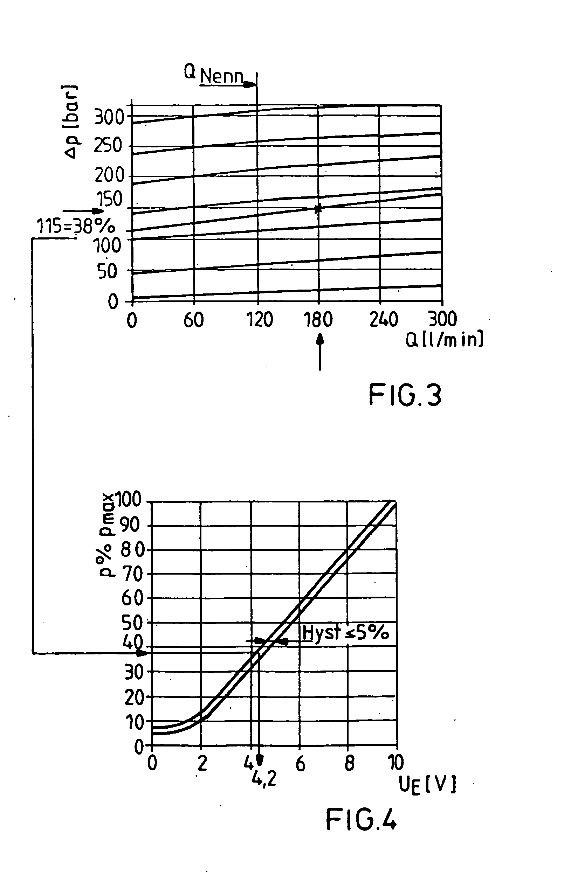

In den Fig. 3 und 4 sind aus dem vorstehend genannten RD-Merkblatt 29140/07.05 einerseits die Abhängigkeit der Druckdifferenz Δp vom Volumenstrom Q und die Abhängigkeit eines Prozentwertes für den Druck von dem Sollwert für die Ventilspannung V_{D} bzw. für den Ventilstrom I_{E} wiedergegeben. Diese Kennlinien werden nachfolgend verwendet, um beispielhaft eine Steuerung in der Steuereinrichtung 6 entsprechend der vorliegenden Erfindung zu beschreiben:

Das Druckbegrenzungsventil 2 befindet sich beispielsweise zwischen einer Pumpe am Pumpenanschluss P und einem hydraulischen Verbraucher am Arbeitsanschluss A. Über den Differenzdruckmesser wird eine Druckdifferenz Δp von beispielsweise 150 bar ermittelt. Wenn ein Sollvolumenstrom von 180 l/min vorgegeben wird, so ergibt sich aus dem Kennfeld aus Fig. 3 mit der zugeordneten Q/p-Kurve ein einzustellender Drucksollwert von 115 Bar. Dieser entspricht ungefähr 38 % des maximalen Nenndrucks, wodurch in Fig. 4 ein Ventilsollwert von 4,2 Volt erhalten wird.

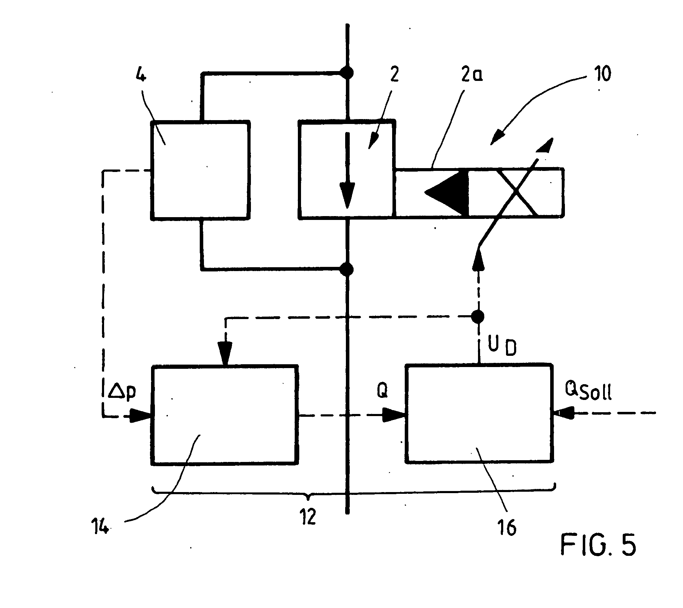

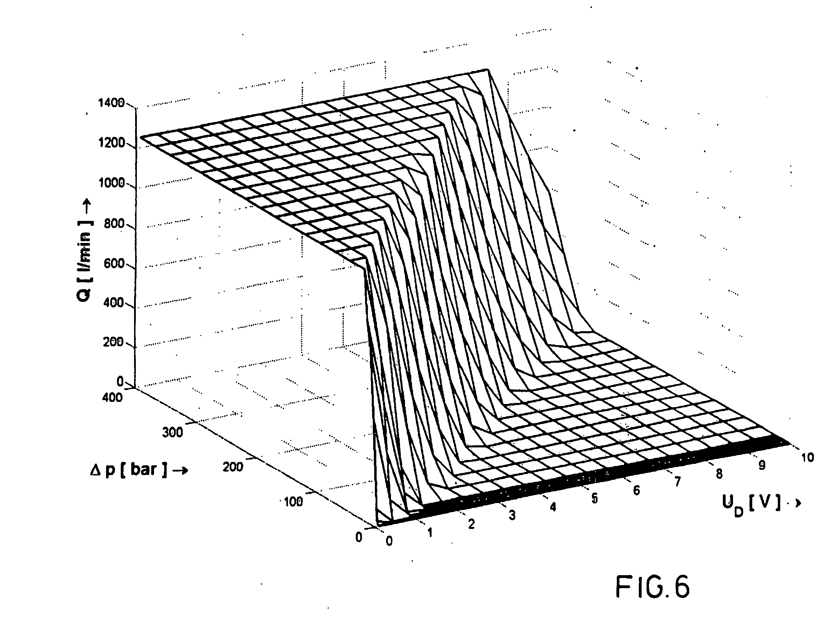

In Fig. 5 ist eine Steueranordnung 10 mit einem Druckbegrenzungsventil 2 und einem Differenzdruckmesser 4 dargestellt. Im Unterschied zum ersten Ausführungsbeispiel weist die Steuereinrichtung 12 eine Berechnungseinrichtung 14 und einen Regler 16 auf. In der Berechnungseinrichtung 14 werden aus dem Differenzdruck Δp des Differenzdruckmessers 4 und dem Ventilsollwert U_{D} über ein in Fig. 6 wiedergegebenes Kennlinienfeld der Volumenstrom Q ermittelt. Der erhaltene Volumenstrom wird dem Regler 16 zugeführt und mit dem Sollwert O_{Soll} für den Volumenstrom verglichen. Aus der Regelabweichung ergibt sich ein entsprechender Ventilsollwert U_{D}, der dem Vorsteuerventil 2a zugeleitet wird.

Bei der Steueranordnung entsprechend dem zweiten Ausführungsbeispiel wird der Volumenstrom Q indirekt gemessen und wird durch der Regler 16 ein Signal für den Ventilsollwert U_{D} ausgeben, so dass im Idealfall der über die Berechnungseinheit 14 erhaltene Istwert Q für den Volumenstrom gleich dem Sollwert Q_{Soll} für den Volumenstrom ist. Das Kennlinienfeld aus Fig. 6 stellt den berechneten Ist-Wert Q für den Volumenstrom in Abhängigkeit von der gemessenen Druckdifferenz Δp an dem Druckmesser 4 und von dem Ventilsollwert U_{D} dar. Auch das Kennlinienfeld aus Fig. 6 kann durch Invertieren aus dem von Fig. 8 erhalten werden.

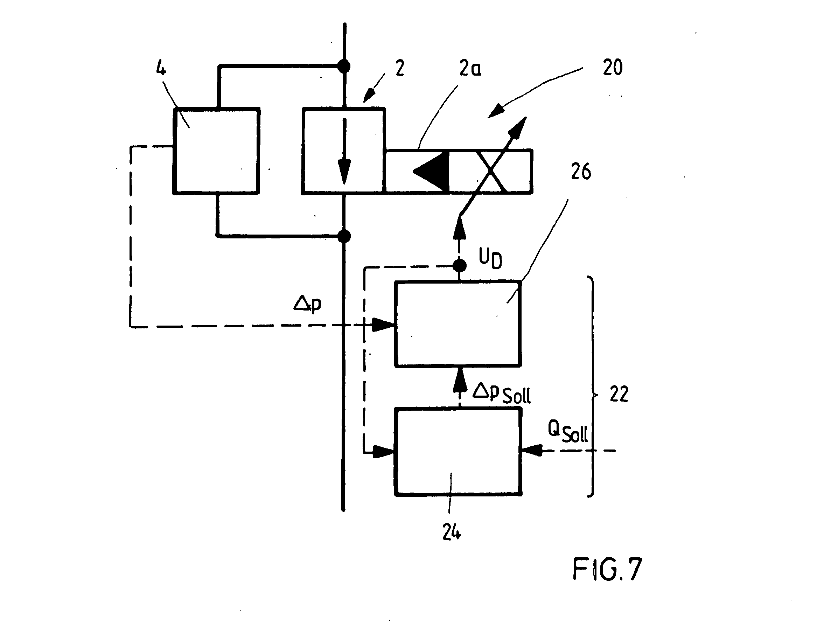

Fig. 7 zeigt eine Steueranordnung 20 entsprechend dem dritten Ausführungsbeispiel mit einem Druckbegrenzungsventil 2 und einem Differenzdruckmesser 4. Die Steuereinrichtung 22 weist eine Berechnungseinrichtung 24 und einen Regler 26 auf. In der Berechnungseinrichtung 24 ist beispielsweise das in Fig. 8 gezeigte Kennlinienfeld implementiert. Das Kennlinienfeld aus Fig. 8 stellt die Druckdifferenz Δp_{Soll} in Abhängigkeit vom Sollvolumenstrom Q_{Soll} und vom Ventilsollwert U_{D} dar. Der ermittelte Sollvolumenstrom Δp_{Soll} wird im Regler 26 mit dem Istwert für die Druckdifferenz Δp verglichen und aus diesen Größen der Ventilsollwert U_{D} ermittelt, der dem Vorsteuerventil 2a des Druckbegrenzungsventils 2 zugeleitet wird. Auf diese Weise erfolgt eine Druckdifferenzregelung, bei der der Sollwert Δp_{Soll} für die Druckdifferenz aus dem Sollwert für den Volumenstrom Q_{Soll} und dem Ventilsollwert U_{D} abgeleitet wird.

Mit einer erfindungsgemäßen Steueranordnung kann ein Stromregler mit der gleichen mechanischen Hardware wie ein direkt gesteuertes oder vorgesteuertes Begrenzungsventil umgesetzt werden. Die Änderung des Regelverhaltens ergibt sich auf Grund eines anderen Verhaltens der Steuereinrichtung. Während bei herkömmlichen Stromregelventilen mit Druckwaage beispielsweise ein Volumenstrom von 160 Liter je Minute umgesetzt werden kann, wird durch den Einsatz von Druckbegrenzungsventilen als Stromregler ein Volumenstrom beispielsweise von 250 oder 650 Liter je Minute realisierbar.

Noch größere Gestaltungsfreiheiten ergeben sich, wenn der Differenzdruckmesser 4 durch einen jeweiligen Druckgeber am Pumpenanschluss P und am Arbeitsanschluss A ersetzt wird. Über eine entsprechende Auswertelektronik lässt sich der Differenzdruck zur Umsetzung der Steueranordnung des ersten bis dritten Ausführungsbeispiels realisieren. So ist zusätzlich zur Stromregelfunktion durch eine derartige Steueranordung eine Druckbegrenzungsfunktion mit Regelung des begrenzten Druckes am Arbeitsanschluss A und eine Druckbegrenzungsfunktion mit Regelung der Druckdifferenz Δp umsetzbar. Für die Stromregelfunktion und die Druckbegrenzungsfunktion können folglich hydraulisch die gleichen Ventiltypen zum Einsatz gelangen.

Darüber hinaus kann bei Verwendung einer Berechnungseinrichtung 14 entsprechend dem zweiten Ausführungsbeispiel aus Fig. 5 aus dem gemessenen Drücken und dem Ventilsollwert U_{D} ein indirekter Messwert für den Volumenstrom Q erzeugt werden. Auf Grund der Kopplung mit der Steuereinrichtung lässt sich somit der Funktionsumfang von Druckbegrenzungsventilen erweitern.

Die vorliegende Erfindung ist nicht auf den Einsatz bei Druckbegrenzungsventilen beschränkt, sondern es kann auch der Einsatz von Proportional-Drosselventilen erfolgen.

Es wird eine Steueranordnung mit einem Druckbegrenzungsventil oder einem Proportional-Drosselventil offenbart, bei der eine Steuereinrichtung vorgesehen ist, die einen Betrieb der Steueranordnung als Stromregelfunktion ermöglicht. Neben der Druckbegrenzungsfunktion kann somit ein baugleiches Ventil als Stromregelventil für hohe Volumenströme zum Einsatz gelangen.

### Bezugszeichenliste

- 1: Steueranordnung
- 2: Druckbegrenzungsventil
- 2a: Vorsteuerventil
- 4: Differenzdruckmesser
- 6: Steuereinrichtung
- 10: Steueranordnung
- 12: Steuereinrichtung
- 14: Berechnungseinrichtung
- 16: Regler
- 20: Steueranordnung
- 22: Steuereinrichtung
- 24: Berechnungseinrichtung
- 26: Regler

## Patentansprüche

1. Steueranordnung (20) mit einem elektrisch betätigten vorgesteuerten Proportional-Druckbegrenzungsventil (2) und einer Steuereinrichtung (6; 12; 22) zum Ansteuern des Ventils im Sinne einer Volumenstromregelung, **dadurch gekennzeichnet, dass**
zur Minimierung der Hysterese des vorgesteuerten Druckbegrenzungsventils entweder ein Magnetanker des Vorsteuerventils mit einer unterlagerten Lageregelung vorgesehen ist oder eine unterlagerte Druckregelung eines Vorsteuerdrucks des Vorsteuerventils vorgesehen ist, und die Steuereinrichtung gemäß einer der drei folgenden Varianten eingerichtet ist:
wobei die Steuereinrichtung (6) einen Ventilsollwert (U_{D}) in Form einer Steuerspannung (U_{D}) in Abhängigkeit von einer Druckdifferenz über dem Ventil und einem Sollvolumenstrom (Q_{Soll}) aus einem Kennlinienfeld ermittelt, oder
wobei die Steuereinrichtung (12) einen Regler (16) für den Ventilsollwert (U_{D}) aufweist, dem Eingangssignale zugeführt werden, die einem Sollvolumenstrom (Q_{Soll}) und einem über ein Kennlinienfeld aus der Druckdifferenz (Δp) über dem Ventil und dem Ventilsollwert (U_{D}) ermittelten Volumenstrom (Q) entsprechen, oder
wobei die Steuereinrichtung (22) einen Regler (26) für den Ventilsollwert (U_{D}) aufweist, dem Eingangssignale zugeführt werden, die einer Druckdifferenz (Δp) über dem Ventil und einer über ein Kennlinienfeld aus dem Sollvolumenstrom (Q_{Soll}) und dem Ventilsollwert (U_{D}) ermittelten Druckdifferenz entsprechen.

2. Steueranordnung nach Anspruch 1, mit einer Messeinrichtung (4) für die Druckdifferenz über dem Ventil (2).

3. Steueranordnung nach Anspruch 1 mit einer Druckmesseinrichtung für den Druck stromaufwärts und einer Druckmesseinrichtung für den Druck stromabwärts von dem Ventil (2).

## Claims

1. Control arrangement (20) having an electrically activated, pilot-controlled proportional pressure-limiting valve (2) and a control device (6; 12; 22) for actuating the valve as a volume flow regulator, **characterized in that**
in order to minimize the hysteresis of the pilot-controlled pressure-limiting valve either a solenoid armature of the pilot-control valve with a subordinate position regulator is provided, or a subordinate pressure regulator of a pilot-control pressure of the pilot-control valve is provided and the control device is configured according to one of the three following variants:
wherein the control device (6) determines a valve setpoint value (U_{D}) in the form of a control voltage (U_{D}) as a function of a pressure difference across the valve and a setpoint volume flow (Qₛₑₜₚ) from a characteristic diagram, or
wherein the control device (12) has a regulator (16) for a valve setpoint value (U_{D}) which is supplied with input signals which correspond to a setpoint volume flow (Qₛₑₜₚ) and a volume flow (Q) which is determined by means of a characteristic diagram from the pressure difference (Δp) across the valve and from the valve setpoint value (U_{D}), or
wherein the control device (22) has a regulator (26) for the valve setpoint value (U_{D}) which is supplied with input signals which correspond to a pressure difference (Δp) across the valve and a pressure difference determined by means of a characteristic diagram from the setpoint volume flow (Qₛₑₜₚ) and from the valve setpoint value (U_{D}).

2. Control arrangement according to Claim 1, having a measuring device (4) for the pressure difference across the valve (2).

3. Control arrangement according to Claim 1, having a pressure-measuring device for the pressure upstream, and a pressure-measuring device for the pressure downstream, of the valve (2).

## Revendications

1. Agencement de commande (20) comprenant une soupape de limitation de pression proportionnelle (2) pilotée et commandée électriquement et un dispositif de commande (6 ; 12 ; 22) pour commander la soupape dans le sens d'une régulation du débit volumique, **caractérisé en ce que** pour minimiser l'hystérésis de la soupape de limitation de pression pilotée, soit on prévoit un induit magnétique de la soupape pilote avec une régulation de position subordonnée soit on prévoit une régulation de pression subordonnée d'une pression pilote de la soupape pilote, et le dispositif de commande est prévu selon l'une des trois variantes suivantes :
le dispositif de commande (6) détermine une valeur de consigne de soupape (U_{D}) sous la forme d'une tension de commande (U_{D}) en fonction d'une différence de pression en travers de la soupape et d'un débit volumique de consigne (Q_{Soll}) à partir d'un champ caractéristique, ou
le dispositif de commande (12) présente un régulateur (16) pour la valeur de consigne de soupape (U_{D}), auquel des signaux d'entrée sont acheminés, lesquels correspondent à un débit volumique de consigne (Q_{Soll}) et à un débit volumique (Q) déterminé par le biais d'un champ caractéristique à partir de la différence de pression (Δp) en travers de la soupape et de la valeur de consigne de soupape (U_{D}), ou
le dispositif de commande (22) présente un régulateur (26) pour la valeur de consigne de soupape (U_{D}) auquel sont acheminés des signaux d'entrée qui correspondent à une différence de pression (Δp) en travers de la soupape et à une différence de pression déterminée par le biais d'un champ caractéristique à partir du débit volumique de consigne (Q_{Soll}) et de la valeur de consigne de soupape (U_{D}).

2. Agencement de commande selon la revendication 1, comprenant un dispositif de mesure (4) pour la différence de pression en travers de la soupape (2).

3. Agencement de commande selon la revendication 1, comprenant un dispositif de mesure de pression pour la pression en amont et un dispositif de mesure de pression pour la pression en aval de la soupape (2).
